# EUROPÄISCHE PATENTSCHRIFT

(11) **EP 1 203 733 B1**
(45) Veröffentlichungstag und Bekanntmachung des Hinweises auf die Patenterteilung: **30.06.2004**
(21) Anmeldenummer: 01125949.6
(22) Anmeldetag: 31.10.2001
(51) Int. Cl.: B65D 81/34, B65D 65/42, A22C 13/00

(54) **Verpackungshülle für Nahrungsmittel**
Packaging wrapper for food products
Enveloppe d'emballage pour produits alimentaires

(30) Priorität: 06.11.2000 DE 10054882
(43) Veröffentlichungstag der Anmeldung: 08.05.2002
(73) Patentinhaber: World-Pac International AG, 9490 Vaduz (LI)
(72) Erfinder:
(74) Vertreter: Brommer, Hans Joachim, Dr.-Ing.

(56) Entgegenhaltungen:
- WO-A-98/31731
- GB-A- 756 346
- US-A- 4 191 673
- US-A- 4 666 750

## Beschreibung

Die Erfindung betrifft eine Verpackungshülle in Form einer nicht schlauchförmigen Flachfolie für Nahrungsmittel, insbesondere Kochschinken oder Pökelprodukte, wobei die Verpackungshülle wasserunlöslich und gegebenenfalls für einen Kochprozess geeignet ist und aus einer gas-, wasserdampf- und/oder rauchdurchlässigen Folie besteht, an deren dem Nahrungsmittel abgewandten Seite ein Netz zur Festigkeitserhöhung angelegt werden kann.

Im folgenden wird die Erfindung in der Verbindung mit der Verpackung von Kochschinken oder Pökelprodukten beschrieben, bei denen die Verpackungshülle einem Kochprozess unterzogen wird. Dies ist der Hauptanwendungsfall der vorliegenden Erfindung. Es sei aber darauf hingewiesen, dass die erfindungsgemäße Verpackung auch für andere Nahrungsmittel, insbesondere Fisch oder Käse geeignet ist sowie für Nahrungsmittel, bei denen die Verpackungshülle keinem Kochprozess unterliegt.

Um einen Kochschinken oder ein Kochpökelprodukt mit einem elastischen oder starren Netz herzustellen, ist eine Folie nötig, die zwischen das Fleischprodukt und das Netz platziert wird, um beim Kochprozess ein Verkleben des Fleischeiweißes am Netz zu verhindern. Dazu werden heute essbare Collagenfolien verwendet.

Die Verwendung und Verarbeitung dieser Collagenfolien ist jedoch in mehrfacher Hinsicht problematisch. Zum einen hat die Collagenfolie nur sehr geringe Reißfestigkeit und noch geringere Weiterreißfestigkeit; geringfügige Beschädigungen führen daher zu einem sich fortpflanzenden Riss in der Folie. Zum anderen lässt sich Collagenfolie nur unter sehr begrenzten Feuchtigkeits- und Temperaturverhältnissen verarbeiten. Sie muss dazu aufwendig in klimatisierten Räumen gelagert und verarbeitet werden.

Häufig ist es auch erwünscht, die Folie zu perforieren, damit Luftnester, die sich beim Kochprozess unter der Folie bilden, entweichen können. Dieses Perforieren ist wegen der geringen Weiterreißfestigkeit der Collagenfolie nicht möglich. Vielmehr muss statt dessen das fertige Produkt nach dem Aufbringen des Netzes von Hand gestippt werden.

Nicht zuletzt hat die essbare Collagenfolie einen zähen Biss, was sich beim Kunden negativ auswirkt.

Hiervon ausgehend liegt die Aufgabe der vorliegenden Erfindung darin, eine neue Flachfolie anzugeben, die insbesondere auch für Kochschinken oder Kochpökelprodukte geeignet ist ohne die obengenannten Nachteile der Collagenfolien aufzuweisen. Insbesondere soll sich die erfindungsgemäße Folie durch unproblematische Lagerung und Verarbeitung sowie durch vergleichsweise günstige Herstellungskosten auszeichnen.

Diese Aufgabe wird erfindungsgemäß dadurch gelöst, dass die Folie als dünnwandige Faserfolie mit einem Flächengewicht von maximal etwa 120 g/m², insbesondere maximal 100 g/m² ausgebildet ist und an ihrer dem Nahrungsmittel zugewandten Seite eine Antihaft-Beschichtung aus einem lebensmittelrechtlich unbedenklichen Material aufweist, die eine Verbindung des Nahrungsmittels mit der Verpackungshülle verhindert.

Die erfindungsgemäße Faserfolie braucht nicht mehr bei speziellen Temperatur- und Feuchtigkeitsverhältnissen gelagert zu werden, wie dies bei der Collagenfolie zwingend notwendig ist. Sie hat außerdem eine wesentlich höhere Reißfestigkeit und somit eine sehr gute Maschinengängigkeit. Darüber hinaus kann sie aufgrund ihrer höheren Festigkeit auch gestippt bzw. perforiert zum Einsatz kommen, so dass bei einem Kochprozess gebildete Luftpolster zwischen Fleischprodukt und Folie problemlos entweichen können.

Durch ihre innenseitige Antihaft-Beschichtung, die aus Viskose, Silikon, Wachs oder Polyethylen, gegebenenfalls auch Mischungen hiervon, bestehen kann, ist sichergestellt, dass sie sich nicht mit dem beim Kochen koagulierenden Eiweiß des Fleischproduktes verbindet. Sie ist also nach dem Kochprozess gegebenenfalls mit dem Netz zusammen mühelos von dem Fleischprodukt abzuziehen, ohne dass dabei aus der Oberfläche des Fleischproduktes kleine Stücke herausgerissen werden. Der Kunde erhält also ein Produkt, das frei von Verpackungsfolie ist und ein einwandfreies Aussehen hat.

Es sind zwar bereits Kunstdärme mit einer Antihaft-Beschichtung bekannt. Dabei handelt es sich aber um ein sehr steifes und relativ dickwandiges Ausgangsmaterial, das nur für Würste, nicht aber für stückige Ware wie Schinken geeignet ist.

Vorzugsweise hat die äußere Faserfolie nur ein Flächengewicht von 3 bis 80 g/m², insbesondere von 8 bis 20 g/m². Sie ist dadurch hoch flexibel und auch für grobstückige Produkte bestens geeignet. Aus dem gleichen Grund wird auch für die Antihaft-Beschichtung mit äußerst geringen Flächengewichten gearbeitet, nämlich 0,5 bis 100 g/m², vorzugsweise 1 bis 50 g/m², insbesondere 1 bis 10 g/m². Insgesamt hat die Verpackungshülle also ein Flächengewicht von vorzugsweise maximal etwa 50 g/m².

Um jegliche Verbindung des Nahrungsmittels mit der Verpackungshülle zu verhindern, ist es vorteilhaft, wenn die Antihaft-Beschichtung die Faserfolie vollständig bedeckt. Es liegt aber auch im Rahmen der Erfindung, nur mit einer überwiegenden Beschichtung zu arbeiten, so dass nur minimale Bereiche übrig bleiben, wo das Fleischprodukt eine Verbindung mit der Folie eingehen könnte.

Um die Wasserundurchlässigkeit der Verpackungshülle zu gewährleisten, die ein Auslaugen des Fleischproduktes verhindert, sind mehrere Möglichkeiten denkbar:

Zum einen kann die Faserfolie wasserundurchlässig sein.

Weiter kann - bei Einsatz einer wasserdurchlässigen Faserfolie - die Antihaft-Beschichtung wasserundurchlässig sein. Dabei sollte die Antihaft-Beschichtung die Faserfolie vollständig bedecken, denn nur dann ist garantiert, dass kein Wasser durch Beschichtungslücken in die Verpackungshülle eindringen bzw. Fleischsaft aus der Verpackungshülle austreten kann. Eine gewisse Wasserdurchlässigkeit - etwa aufgrund von Perforation - ist aber meist tolerierbar.

Schließlich ist es auch denkbar, dass sowohl die Antihaft-Beschichtung als auch die Faserfolie wasserundurchlässig sind. Dies hat dann den Vorteil, dass kleine Beschädigungen entweder an der Faserfolie oder an der Beschichtung nicht dazu führen, dass die Verpackungshülle insgesamt wasserdurchlässig wird.

Um die Gas-, Wasserdampfdurchlässigkeit und/oder die Rauchdurchlässigkeit der Verpackungshülle zu gewährleisten, ist es zweckmäßig, wenn sowohl die Antihaft-Beschichtung als auch die Faserfolie gas-, wasserdampf- und/oder rauchdurchlässig ist.

Weiter kann aber auch alternativ eine gas-, wasserdampf- und/oder rauchundurchlässige Antihaft-Beschichtung eingesetzt werden, wenn in dieser Beschichtung ausreichend viele Lücken vorgesehen sind. Diese Lücken garantieren dann, dass durch sie die beim Kochprozess austretenden Gase - trotz der Undurchlässigkeit der Beschichtung selbst - entweichen können.

Derartige Beschichtungslücken sind insbesondere dann zweckmäßig, wenn die Antihaft-Beschichtung aus Wachs oder Polyethylen besteht, da diese Materialien im Wesentlichen gas-, wasserdampf- und rauchundurchlässig sind.

Allerdings ist in diesem Zusammenhang zu beachten, dass selbst diese an sich gas- und rauchundurchlässigen Materialien dann wieder durchlässig werden, wenn die Schichtdicke der aus diesen Materialien aufgebauten Antihaft-Beschichtung ausreichend dünn ist, da bekanntermaßen die Gas-, Wasserdampf- und Rauchdurchlässigkeit eines Materials von der eingesetzten Schichtdicke abhängt.

Was das Aufbringen der Antihaft-Beschichtung auf die Faserfolie angeht, so ist es vorteilhaft, wenn diese aufgedruckt, aufgewalzt, aufgestrichen oder aufgeklebt wird, da diese Verfahren einfach und kostengünstig durchführbar sind. Beim Aufkleben der Antihaftbeschichtung auf die Folie ist zu beachten, dass ein lebensmittelrechtlich unbedenklicher Klebstoff eingesetzt wird. Die Antihaft-Beschichtung kann selbst in Folienform vorliegen.

Die für die Verpackungshülle eingesetzte Faserfolie kann zweckmäßig ein Gewirke, Gestricke, Vlies oder Gewebe sein, beispielsweise aus Cellulose, Zellwolle, Baumwolle, Polyethylen, Polypropylen und/oder Polyamid. Weiter ist natürlich eine Mischung dieser Stoffe denkbar. Die Folie kann durchaus eine gewisse Elastizität aufweisen.

Besonders zweckmäßig ist es, wenn die Verpackungshülle, also sowohl die Faserfolie, wie auch die Antihaft-Beschichtung transparent ist. Dadurch kann die Verpackungshülle mit dem Produkt verkauft werden und bis zum Endverbraucher am Produkt bleiben.

Was das "Netz" angeht, das unter Eigenspannung auf der dem Fleischprodukt abgewandten Seite der Verpackungshülle anliegen kann, so soll mit diesem Begriff jegliche Art von Material gemeint sein, das im Wesentlichen zwei Forderungen erfüllt:

Es muss reißfest sein, um eine Schutzeigenschaft für die Faserfolie zu gewährleisten. Des weiteren sollte es vorzugsweise gas,- wasserdampf- und rauchdurchlässig sein, damit die Fleischprodukte darin sachgerecht reifen, gelagert, gekocht und geräuchert werden können. Hierzu kann auf bekannte Produkte zurückgegriffen werden.

Hinsichtlich des Verfahrens zur Herstellung der erfindungsgemäßen Verpackungshülle empfiehlt es sich, dass die Antihaft-Beschichtung in flachem Zustand der Folie aufgebracht wird, und zwar entweder durch ein Streichblech (Master-Knife) oder mittels einer Druckmaschine mit Tiefdruckzylinder. Beide Verfahren sind erheblich kostengünstiger realisierbar, als das Aufbringen auf eine schlauchförmige Hülle.

Vor dem Kochprozess wird dann das unter erheblicher Vorspannung stehende Netz über das in die Folie eingehüllte Fleischprodukt übergezogen.

Im Folgenden wird die Erfindung anhand eines Ausführungsbeispiels einer erfindungsgemäßen Verpackungshülle für Kochschinken erläutert:

Die Verpackungshülle besteht aus einer sehr dünnen Cellulosefaserfolie mit einem Flächengewicht von 17 g/m², die sowohl gas-, und wasserdampf- als auch in hohem Maße rauchdurchlässig ist.

An der im gefüllten Zustand dem Fleischprodukt zugewandten Seite ist ganzflächig durch eine Walzenauftragsmaschine eine Antihaft-Beschichtung aus Viskose mit einem Flächengewicht von 5 g/m² aufgebracht, die ebenfalls gas-, wasserdampf- und rauchdurchlässig ist. Diese Viskosebeschichtung ergibt eine besonders gute Abschälbarkeit der Verpackungshülle vom Fleischprodukt, gleichzeitig verbessert sie die Weiterreißfestigkeit der Folie.

Die Folie wird dann um den Kochschinken herum gewickelt, so dass sich die Folienränder leicht überlappen. Sodann wird ein an sich bekanntes elastisches Netz aufgeweitet und über den in die Folie eingepackten Schinken gespannt.

Nach dem Kochprozess wird die Folie mit dem Netz abgezogen.

Es kann im Übrigen vorteilhafterweise vorgesehen werden, die Beschichtung mit Farbstoffen, Flüssiggewürzen, Flüssigaromen, Flüssigrauch oder Ähnlichem zu imprägnieren, die während des Kochprozesses auf das Fleischprodukt übergehen. Auch liegt es im Rahmen der Erfindung, die Folie mit essbarer Farbe zu bedrucken, die beim Kochen auf das Produkt übergeht.

Die vorliegende Erfindung stellt eine leicht handzuhabende kostengünstig herzustellende Verpackungshülle für zu kochende Fleischprodukte zur Verfügung, die nach dem Kochprozess mühelos vom Fleischprodukt abgenommen werden kann.

## Patentansprüche

1. Verpackungshülle in Form einer nicht schlauchförmigen Flachfolie für Nahrungsmittel, insbesondere für Kochschinken oder Kochpökelprodukte, wobei die Verpackungshülle wasserunlöslich ist und aus einer gas-, wasserdampf- und/oder rauchdurchlässigen Folie besteht, an deren dem Nahrungsmittel abgewandten Seite gegebenenfalls ein Netz zur Festigkeitserhöhung anlegbar ist,
**dadurch gekennzeichnet,**
**dass** die Folie als dünnwandige Faserfolie mit einem Flächengewicht von maximal etwa 120 g/m², insbesondere maximal 100 g/m² ausgebildet ist und an ihrer dem Nahrungsmittel zugewandten Seite eine Antihaft-Beschichtung aus einem lebensmittelrechtlich unbedenklichen Material aufweist, die eine Verbindung des Nahrungsmittels mit der Verpackungshülle verhindert.

2. Verpackungshülle nach Anspruch 1,
**dadurch gekennzeichnet,**
**dass** die Faserfolie ein Flächengewicht von etwa 3 bis 80 g/m², insbesondere etwa 8 bis 20 g/m² aufweist.

3. Verpackungshülle nach Anspruch 1,
**dadurch gekennzeichnet,**
**dass** die Antihaft-Beschichtung aus Viskose, Silikon, Wachs oder Polyethylen besteht.

4. Verpackungshülle nach Anspruch 1,
**dadurch gekennzeichnet,**
**dass** die Antihaft-Beschichtung ein Flächengewicht von etwa 0,5 bis 100 g/m², insbesondere von etwa 1 bis 50 g/m² aufweist.

5. Verpackungshülle nach Anspruch 1,
**dadurch gekennzeichnet,**
**dass** die Antihaft-Beschichtung als Folie vorliegt.

6. Verpackungshülle gemäß Anspruch 1,
**dadurch gekennzeichnet,**
**dass** die Antihaft-Beschichtung die Faserfolie zumindest überwiegend bedeckt.

7. Verpackungshülle gemäß Anspruch 1,
**dadurch gekennzeichnet,**
**dass** die Antihaft-Beschichtung und/oder die Faserfolie wasserundurchlässig ist.

8. Verpackungshülle gemäß Anspruch 1,
**dadurch gekennzeichnet,**
**dass** die Antihaft-Beschichtung gas-, wasserdampf- und/oder rauchdurchlässig ist.

9. Verpackungshülle gemäß Anspruch 1,
**dadurch gekennzeichnet,**
**dass** beim Einsatz einer gas-, wasserdampf- und/oder rauchundurchlässigen Antihaft-Beschichtung Lücken in dieser Beschichtung vorgesehen sind.

10. Verpackungshülle gemäß Anspruch 1,
**dadurch gekennzeichnet,**
**dass** die Antihaft-Beschichtung aufgedruckt, aufgewalzt, aufgestrichen oder aufgeklebt ist.

11. Verpackungshülle gemäß Anspruch 1,
**dadurch gekennzeichnet,**
**dass** die Faserfolie ein Gewirke, Gestricke, Vlies oder Gewebe ist.

12. Verpackungshülle gemäß Anspruch 1,
**dadurch gekennzeichnet,**
**dass** die Faserfolie aus Cellulose-Fasern oder künstlichen Fasern oder Gemischen hiervon besteht, die zu einem Gewirke, Gestricke, Vlies oder Gewebe zu verarbeiten sind.

13. Verpackungshülle gemäß Anspruch 1,
**dadurch gekennzeichnet,**
**dass** sie gestippt bzw. perforiert ist.

14. Verpackungshülle gemäß Anspruch 1,
**dadurch gekennzeichnet,**
**dass** sie imprägniert ist mit Flüssiggewürzen, Flüssigaromen und/oder Flüssigrauch.

15. Verpackungshülle gemäß Anspruch 1,
**dadurch gekennzeichnet,**
**dass** sie mit essbarer Farbe bedruckt ist.

16. Verpackungshülle gemäß Anspruch 1,
**dadurch gekennzeichnet,**
**dass** sie transparent ist.

17. Verpackungshülle gemäß Anspruch 1,
**dadurch gekennzeichnet,**
**dass** sie für einen Erhitzungs- insbesondere Kochprozess geeignet ist.

18. Verfahren zur Herstellung einer Verpackungshülle in Form einer nicht schlauchförmigen Flachfolie für Nahrungsmittel, insbesondere für Kochschinken oder Pökelprodukte, wobei die Verpackungshülle wasserunlöslich ist und aus einer gas-, wasserdampf- und/oder rauchdurchlässigen Folie besteht, an deren dem Nahrungsmittel abgewandten Seite gegebenenfalls ein Netz zur Festigkeitserhöhung übergespannt werden kann,
**dadurch gekennzeichnet,**
**dass** die Folie aus Fasern hergestellt wird und ein Flächengewicht von 15 bis 100 g/m² aufweist und dass an zumindest einer Seite der Folie eine Antihaft-Beschichtung aus einem lebensmittelrechtlich unbedenklichen Material aufgetragen wird, die während der späteren Verarbeitung eine Verbindung des Nahrungsmittels mit der Verpackungshülle verhindert.

19. Verfahren nach Anspruch 18,
**dadurch gekennzeichnet,**
**dass** die Antihaft-Beschichtung in flachem Zustand der Folie aufgebracht wird.

20. Verfahren nach Anspruch 18,
**dadurch gekennzeichnet,**
**dass** die Antihaft-Beschichtung durch ein Streichblech oder durch eine Walzenauftragsmaschine aufgebracht wird.

21. Verfahren nach Anspruch 18,
**dadurch gekennzeichnet,**
**dass** die Antihaft-Beschichtung durch eine Druckmaschine mit Tiefdruckzylinder auf die Folie aufgebracht wird.

## Claims

1. A packaging wrapper in the form of a non-tubular flat film, particularly for cooked ham or cooked salted products, the packaging wrapper being water-insoluble and consisting of a gas-,water vapour- and/or smoke-permeable film, to whose surface remote from the food product a net may be applied to increase its strength, **characterised in that** the film is in the form of a thin-walled fibre film with a weight per unit area of at most about 120 g/m², in particular at most 100 g/m², and on its surface directed towards the food product has a non-stick coating, which is harmless within the meaning of foodstuff legislation and prevents the food product becoming connected to the packaging wrapper.

2. A packaging wrapper as claimed in Claim 1, **characterised in that** the fibre film has a weight per unit area of about 3 to 80 g/m², particularly about 8 to 20 g/m².

3. A packaging wrapper as claimed in Claim 1, **characterised in that** the anti-stick coating consists of viscose, silicone, wax or polyethylene.

4. A packaging wrapper as claimed in Claim 1, **characterised in that** the anti-stick coating has a weight per unit area of about 0.5 to 100 g/m², particularly of about 1 to 50 g/m².

5. A packaging wrapper as claimed in Claim 1, **characterised in that** the anti-stick coating is present in the form of a film.

6. A packaging wrapper as claimed in Claim 1, **characterised in that** the anti-stick coating at least predominantly covers the fibre film.

7. A packaging wrapper as claimed in Claim 1, **characterised in that** the anti-stick coating and/or the fibre film is water-impermeable.

8. A packaging wrapper as claimed in Claim 1, **characterised in that** the anti-stick coating is gas-, water vapour- and/or smoke-permeable.

9. A packaging wrapper as claimed in Claim 1, **characterised in that** when using a gas-, water vapour- and/or smoke-impermeable anti-stick coating, interstices are provided in this coating.

10. A packaging wrapper as claimed in Claim 1, **characterised in that** the anti-stick coating is pressed on, rolled on, spread on or glued on.

11. A packaging wrapper as claimed in Claim 1, **characterised in that** the fibre film is a fabric, a knitted structure, a fleece or netting.

12. A packaging wrapper as claimed in Claim 1, **characterised in that** the fibre film consists of cellulose fibres or artificial fibres or mixtures thereof, which are to be processed into a fabric, a knitted structure, fleece or netting.

13. A packaging wrapper as claimed in Claim 1, **characterised in that** it is pierced or perforated.

14. A packaging wrapper as claimed in Claim 1, **characterised in that** it is impregnated with liquid spices, liquid flavourings and/or liquid smoke.

15. A packaging wrapper as claimed in Claim 1, **characterised in that** it is printed with edible ink.

16. A packaging wrapper as claimed in Claim 1, **characterised in that** it is transparent.

17. A packaging wrapper as claimed in Claim 1, **characterised in that** it is suitable for a heating process, particularly a cooking process.

18. A method of manufacturing a packaging wrapper in the form of a non-tubular flat film for food products, particularly for cooked ham or salted products, the packaging wrapper being water-insoluble and consisting of a gas-, water vapour-, and/or smoke-permeable film over whose surface directed away from the food product a netting can optionally be stretched for increasing its strength, **characterised in that** the film is produced from fibres and has a weight per unit area of 15 to 100 g/m² and that an anti-stick coating of a material which is harmless within the meaning of foodstuff legislation is applied to at least one surface of the film which prevents sticking of the food product to the packaging wrapper during the subsequent processing.

19. A method as claimed in Claim 18, **characterised in that** the anti-stick coating is applied in the flat state of the film.

20. A method as claimed in Claim 18, **characterised in that** the anti-stick coating is applied by a spreading plate or a roller application machine.

21. A method as claimed in Claim 18, **characterised in that** the anti-stick coating is applied to the film by a printing machine with a roller produced by intaglio engraving.

## Revendications

1. Enveloppe d'emballage sous forme d'une feuille ou d'un film plat non tubulaire pour des produits alimentaires, notamment du jambon cuit ou des aliments saumurés cuits, l'enveloppe d'emballage étant insoluble dans l'eau et se composant d'une feuille ou d'un film perméable aux gaz, à la vapeur d'eau et/ou aux fumées et pouvant éventuellement recevoir sur la face opposée au produit alimentaire un filet destiné à augmenter la résistance, **caractérisée en ce que** le film est conçu sous forme d'un mince film de fibres d'un grammage maximal de l'ordre de 120 g/m², en particulier de 100 g/m² au plus, et qu'il comporte sur son côté faisant face à l'aliment, un revêtement anti-adhésif issu d'un matériau sans risque sur le plan de la législation sur les produits alimentaires, qui empêche une liaison entre l'aliment et l'enveloppe d'emballage.

2. Enveloppe d'emballage selon la revendication 1, **caractérisée en ce que** le film de fibres présente un grammage compris entre environ 3 et 80 g/m², en particulier entre environ 8 et 20 g/m².

3. Enveloppe d'emballage selon la revendication 1, **caractérisée en ce que** le revêtement anti-adhésif est constitué de viscose, de silicone, de cire ou de polyéthylène.

4. Enveloppe d'emballage selon la revendication 1, **caractérisée en ce que** le revêtement anti-adhésif présente un grammage compris entre environ 0,5 et 100 g/m², en particulier entre environ 1 et 50 g/m².

5. Enveloppe d'emballage selon la revendication 1, **caractérisée en ce que** le revêtement anti-adhésif se présente sous forme de film.

6. Enveloppe d'emballage selon la revendication 1, **caractérisée en ce que** le revêtement anti-adhésif recouvre le film de fibres au moins majoritairement

7. Enveloppe d'emballage selon la revendication 1, **caractérisée en ce que** le revêtement anti-adhésif et/ou le film de fibres sont imperméables à l'eau.

8. Enveloppe d'emballage selon la revendication 1, **caractérisée en ce que** le revêtement anti-adhésif est perméable aux gaz, à la vapeur d'eau et/ou aux fumées.

9. Enveloppe d'emballage selon la revendication 1, **caractérisée en ce** lorsqu'on utilise un revêtement anti-adhésif imperméable aux gaz, à la vapeur d'eau et/ou aux fumées, on prévoit dans ce revêtement des trous ou zones exemptes de revêtement.

10. Enveloppe d'emballage selon la revendication 1, **caractérisée en ce que** le revêtement anti-adhésif est imprimé, laminé, enduit ou collé.

11. Enveloppe d'emballage selon la revendication 1, **caractérisée en ce que** le film de fibres est un tissu maillé, tricoté, non tissé ou tissé.

12. Enveloppe d'emballage selon la revendication 1, **caractérisée en ce que** le film de fibres se compose de fibres de celluloses, de fibres synthétiques ou de mélanges de celles-ci, lesquelles sont à travailler en un tissu maillé, tricoté, non tissé ou tissé.

13. Enveloppe d'emballage selon la revendication 1, **caractérisée en ce qu'**elle est piquée de petits trous ou perforée.

14. Enveloppe d'emballage selon la revendication 1, **caractérisée en ce qu'**elle est imprégnée d'épices liquides, d'arômes liquides et/ou de fumées liquides.

15. Enveloppe d'emballage selon la revendication 1, **caractérisée en ce qu'**elle est imprimée avec un colorant comestible.

16. Enveloppe d'emballage selon la revendication 1, **caractérisée en ce qu'**elle est transparente.

17. Enveloppe d'emballage selon la revendication 1, **caractérisée en ce qu'**elle est adaptée à un processus de chauffage, en particulier de cuisson.

18. Procédé de fabrication d'une enveloppe d'emballage sous forme d'une feuille ou film plat de forme non tubulaire pour des produits alimentaires, notamment du jambon cuit ou des aliments saumurés, l'enveloppe d'emballage étant insoluble dans l'eau et réalisée en film perméable aux gaz, à la vapeur d'eau et/ou aux fumées et pouvant éventuellement recevoir sur la face opposée au produit alimentaire un filet tendu destiné à augmenter la résistance, **caractérisé en ce que** la feuille ou le film est réalisé à partir de fibres et qu'il présente un grammage de 15 à 100 g/m², et **en ce qu'**il est appliqué sur au moins l'un de ses côtés, un revêtement anti-adhésif issu d'un matériau sans risque sur le plan de la législation sur les produits alimentaires, qui empêche l'aliment d'être en liaison avec l'enveloppe d'emballage lors des traitements ultérieurs.

19. Procédé selon la revendication 18, **caractérisé en ce que** le revêtement anti-adhésif est déposé lorsque le film se présente à plat.

20. Procédé selon la revendication 18, **caractérisé en ce que** le revêtement anti-adhésif est déposé au moyen d'une racle ou d'une machine applicatrice à rouleaux.

21. Procédé selon la revendication 18, **caractérisé en ce que** le revêtement anti-adhésif est déposé sur le film à l'aide d'une machine à imprimer à cylindres gravés en creux.
